# EUROPÄISCHE PATENTSCHRIFT

(11) **EP 1 718 888 B1**
(45) Veröffentlichungstag und Bekanntmachung des Hinweises auf die Patenterteilung: **30.07.2008**
(21) Anmeldenummer: 04821680.8
(22) Anmeldetag: 18.11.2004
(51) Int. Cl.: F16J 15/08, F16J 15/12

(54) **ZYLINDERKOPFDICHTUNG MIT ELASTOMER-ABDICHTSCHICHT**
CYLINDER-HEAD GASKET COMPRISING AN ELASTOMER SEALING LAYER
JOINT DE CULASSE A COUCHE ELASTOMERE D'ETANCHEITE

(30) Priorität: 25.02.2004 DE 102004009209
(43) Veröffentlichungstag der Anmeldung: 08.11.2006
(73) Patentinhaber: Federal-Mogul Sealing Systems GmbH, 57562 Herdorf (DE)
(72) Erfinder: LAMBERT, Bernard, F-69360 Communay (FR); RETIERE, Alain, 44300 Nantes (FR); FLEMMING, Ralf, 57520 Langenbach (DE)
(74) Vertreter: Becker Kurig Straus
(86) Internationale Anmeldenummer: PCT/EP2004/013126
(87) Internationale Veröffentlichungsnummer: WO 2005/080834

(56) Entgegenhaltungen:
- EP-A- 1 136 731
- WO-A-20/04063604
- DE-A1- 10 248 395
- DE-A1- 10 248 396
- US-A- 5 277 434
- US-A- 5 618 050

## Beschreibung

Die vorliegende Erfindung betrifft eine Zylinderkopfdichtung für Verbrennungskraftmaschinen, die gegenüber eindringenden Flüssigkeiten abgedichtet ist. Weiterhin betrifft sie eine Zylinderkopfdichtung für Motoren, bei denen Zylinderkopf und Motorblock aus Metallen oder Metalllegierungen bestehen, die sich in ihrem elektrochemischen Potenzial deutlich unterscheiden, wobei die Dichtung gegenüber den abzudichtenden Bauteilen derart elektrisch isoliert ist, dass Kontaktkorrosion verhindert wird. Insbesondere betrifft die vorliegende Erfindung eine Dichtung, bei der Dichtlippen zur besseren Abdichtung und zur Verhinderung von ungewünschtem Anhaften ausgebildet sind.

Bei der Konstruktion von Verbrennungskraftmaschinen werden vermehrt Materialien verwendet, die sich gegenüber lange bekannten Werkstoffen wie Gußeisen durch verbesserte Eigenschaften wie geringeres Gewicht auszeichnen. Vor allem Aluminium- und neuerdings verstärkt Magnesiumlegierungen werden dazu verwendet. Da verschiedene Bauteile eines Motors ganz unterschiedlichen Anforderungen genügen müssen, kommt es beim Aufbau solcher Maschinen zwangsläufig dazu, dass verschiedene Metalle bzw. Metalllegierungen Verwendung finden. Obwohl dies natürlich eine große Flexibilität in Bezug auf die Anpassung der entsprechenden Materialien an die jeweiligen Erfordernisse bedeutet, treten im Vergleich zu Motoren aus nur einem Werkstoff, wie beispielsweise Gußeisen, neue Probleme auf. Dabei ist unter anderem die Neigung zur Kontaktkorrosion nennen, die auftritt, wenn verschiedene Metalle bzw. Metalllegierungen, die verschiedene Redoxpotenziale aufweisen, miteinander in leitendem Kontakt stehen. An Verbindungsstellen solcher Materialpaarungen können Flüssigkeiten wie beispielsweise Salzwasser eintreten, die dann als Elektrolyte dienen und dadurch diese Korrosionsneigung fördern. Die unterschiedliche Wärmeausdehung verschiedener Materialien erschwert natürlich die Abdichtung solcher Kontaktstellen, da vorhandene Spaltmaße vergrößert werden können, und sorgt damit für eine weitere Verstärkung dieses Effekts.

Insbesondere Magnesiumlegierungen, die aufgrund ihrer vorteilhaften Materialeigenschaften in Zukunft vermehrt im Motorenbau anzutreffen sein dürften, besitzen gegenüber dem häufig bei Zylinderkopfdichtungen verwendeten Federstahl ein stark abweichendes Redoxpotenzial. Im Falle einer solchen Materialkombination, natürlich auch bei anderen Legierungen mit abweichendem Potenzial, sind Vorkehrungen notwendig, um die Kontaktkorrosion zu reduzieren, welche die Lebensdauer von Motorbauteilen verringern kann.

Es ist daher wünschenswert, die Kontaktstellen verschiedener Materialien in geeigneter Weise abzudichten und elektrisch voneinander zu isolieren, um Beschädigungen zu verhindern. Bei Verbrennungsmotoren ist die Zylinderkopfdichtung ein besonders gefährdeter Bereich. Hier werden verschiedene Materialien, wie beispielsweise ein Leichtmetall-Zylinderkopf aus einer Magnesiumlegierung, ein Motorblock aus einer Aluminiumlegierung sowie eine Zylinderkopfdichtung aus einem Chrom-Nickel-Federstahl miteinander verbunden. Weiterhin sind Durchtrittsöffnungen z.B. für Kühlflüssigkeit vorhanden, und auch auf der Außenseite des Motors können Flüssigkeiten wie etwa Salzwasser in die Verbindungsstelle zwischen den einzelnen Teilen eintreten. Es ist daher insbesondere erforderlich, eine Zylinderkopfdichtung an den besonders exponierten Randkanten von Durchtrittsöffnungen sowie an der außen liegenden Randkante gegenüber eintretenden Flüssigkeiten abzudichten, sowie möglichst die Kontaktflächen mit Zylinderkopf und Motorblock zu schützen, um Kontaktkorrosion entgegenzuwirken.

EP 0 756 114 A1 beschreibt eine Zylinderkopfdichtung, bei der eine umlaufende Elastomerschicht die Flüssigkeitsaustritte vollständig umschließt, die Löcher für eine Verschraubung aber nicht mit einbezieht. Eine solche Zylinderkopfdichtung ist zur Abdichtung bei Motoren geeignet, die etwa gleiche Materialien im Bereich von Zylinderkopf sowie Motorblock aufweisen. In diesem Falle ist allerdings das Problem einer Potenzialdifferenz eher nicht gegeben. Die Randkanten der Dichtung sind hier auf der Außenseite nicht abgedichtet, die Elastomerschicht befindet sich nur ober- und unterhalb.

DE 101 25 091 A1 beschreibt eine Flachdichtung, z.B. verwendbar als Zylinderkopfdichtung, bei der die Funktionslage mit einem Isolator verbunden ist, der auftretende Potenzialunterschiede reduziert. Der Isolator ist mit einem Rahmen versehen, welcher im Bereich der äußeren Randkanten der Funktionslage unter anderem eine Abdichtwirkung aufweist. Der Isolator umgibt die zu schützende Kante jedoch nicht vollständig.

US 5,618,050 offenbart eine gattungsgemäße Zylinderkopfdichtung. WO 2004/063604 offenbart eine Zylinderkopfdichtung mit einer elastomeren Dichtung am Außenrand, die Rillierungen, Stufen oder Wellen aufweist. Dieses Dokument fällt unter Artikel 54(3) EPÜ.

Die Aufgabe der vorliegenden Erfindung ist es, eine Zylinderkopfdichtung bereitzustellen, durch welche die unterschiedlichen Materialien der abzudichtenden Teile sowie der Dichtung selbst voneinander isoliert sind. Weiterhin sind bei der erfindungsgemäßen Zylinderkopfdichtung die außen liegende Randkante und/oder die Randkanten innenliegender Durchtrittsöffnungen gegenüber eindringenden Flüssigkeiten abgedichtet. Durch die erfindungsgemäße Dichtung sollen Kontaktkorrosionsreaktionen in Bereichen, in denen Materialien mit stark unterschiedlichen Redoxpotenzialen aneinander grenzen, vermieden oder zumindest verringert werden. Durch die Abdichtung gegenüber eindringenden Flüssigkeiten soll die Korrosionsneigung weiter verringert werden. Mit einer Dichtung gemäß der vorliegenden Erfindung kann die Lebensdauer sowohl der Dichtung selbst, als auch der abzudichtenden Bauteile erhöht werden.

Die Aufgabe wird durch eine Zylinderkopfdichtung gelöst nach Anspruch 1, wobei der die Funktionslage an ihrer Randkante von einer schützenden Elastomerschicht umschlossen wird. Bei Dichtungen mit mehr als einer Lage ist jeweils die am weitesten vorstehende Lage umschlossen. Dadurch werden alle Lagen, die weniger weit vorstehen bzw. weiter innen liegen, vor den genannten schädlichen Einflüssen geschützt.

Gemäß einem Aspekt der vorliegenden Erfindung wird eine Zylinderkopfdichtung zur Abdichtung von Bauteilen einer Verbrennungskraftmaschine bereitgestellt. Die Zylinderkopfdichtung umfasst eine metallische Funktionslage mit mindestens einer Öffnung und einer von der Öffnung abgewandten nach außen weisenden Randkante, und eine elektrisch isolierende und fluiddichte Elastomerschicht. Sie ist dadurch gekennzeichnet, dass die Elastomerschicht die Randkante der Funktionslage umschließt. Durch die umschließende Elastomerschicht wird die besonders exponierte Randkante der Funktionslage geschützt, und das Eindringen von Flüssigkeiten und Fremdkörpern wird verhindert. Außerdem bewirkt die Elastomerschicht eine elektrische Isolierung der Funktionslage und der abzudichtenden Bauteile, wodurch Kontaktkorrosion verhindert werden kann, die aufgrund unterschiedlicher Redoxpotenziale der Materialien entsteht.

Erfindungsgemäß umfasst die Zylinderkopfdichtung mindestens eine weitere Lage. Dabei steht die Funktionslage, deren Randkante von der Elastomerschicht umschlossen wird, in einer vom Brennraum abgewandten Richtung über die mindestens eine weitere Lage vor. Dadurch werden alle weiter innenliegenden Lagen vor dem Eindringen von Flüssigkeiten geschützt, während die (Haupt-)Funktionslage gegenüber elektrischem Kontakt mit Zylinderkopf und Motorblock isoliert wird.

Es wird bevorzugt, dass die Elastomerschicht bis an eine Randkante mindestens einer weiteren Lage heranreicht. Dadurch wird die Abdichtung an der Kante möglichst vollständig gehalten.

Es wird bevorzugt, dass eine Elastomerschicht die Randkante der Durchtrittsöffnung umschließt. Dadurch können beispielsweise Öffnungen für den Durchfluss von Kühlwasser oder dergleichen auf die gleiche Weise wie die Außenkante der Dichtung geschützt werden.

Erfindungsgemäß weist die Elastomerschicht jeweils mindestens eine um eine Randkante umlaufende Dichtlippe auf ihrer Ober- und Unterseite auf. Diese Dichtlippen liegen im eingebauten Zustand der Flachdichtung dichtend an den abzudichtenden Bauteilen an. Dadurch werden zwei Vorteile erreicht. Durch die Dichtlippen wird eine durch die erhöhte Pressung verbesserte Dichtung erreicht. Dabei kann gleichzeitig verhindert werden, dass andere, niedrigere Bereiche der Elastomerschicht ungewollt an Zylinderkopf und Motorblock anhaften, wodurch der spätere Austausch der Dichtung erleichtert wird, da keine Rückstände des Elastomers zu entfernen sind. Weiterhin kann gegenüber einer vollflächigen Auflage das horizontale "Ausweichen" bzw. Vorquellen der Elastomerschicht verhindert werden, was beim Einbau durch den vertikalen Druck auftreten kann.

Es wird bevorzugt, dass die Dichtlippen auf der Ober- und Unterseite gegeneinander versetzt angeordnet sind. Dadurch wird ermöglicht, dass sich die Funktionslage leicht wellenförmig durchbiegt, was die Pressung erhöht und somit die Abdichtung verbessert. Ausserdem kann so die Funktionslage Motorvibrationen oder unterschiedliche Wärmeausdehungen von Zylinderkopf und Motorblock besser ausgleichen, indem sie leicht über die versetzten Dichtlippen abrollen kann.

Es wird bevorzugt, dass die Zylinderkopfdichtung mindestens zwei weitere Lagen ober- oder unterhalb der Funktionslage aufweist, und die Elastomerschicht auf der Seite der mindestens zwei weiteren Lagen mindestens zwei Dichtlippen aufweist, und dass mindestens eine Dichtlippe zwischen den äußeren Randkanten der ersten Lage und der zweiten Lage angeordnet ist. Dadurch wird eine zusätzliche Abdichtung erreicht, falls die außen liegende Dichtlippe beispielsweise beschädigt wird oder anderweitig ihrer Abdichtwirkung nicht mehr nachkommen kann. Dabei werden wenigstens alle weiter innen liegenden Lagen noch geschützt. Weiterhin könnte ein Durchbiegen der Randkante der obersten Lage vermindert oder verhindert werden, wodurch die Zylinderkopfdichtung uneben werden könnte.

Es wird bevorzugt, dass die Zylinderkopfdichtung mindestens eine Lage ober- oder unterhalb der Funktionslage aufweist, und die Elastomerschicht bis zwischen die Funktionslage und die mindestens eine Lage reicht. Dadurch kann die Elastomerschicht im eingebauten Zustand der Zylinderkopfdichtung zwischen den zwei Lagen eingeklemmt werden, was eine Abdichtung zwischen den Lagen bewirkt, und die Elastomerschicht weiter davon abhält, von der Funktionslage abgeschert zu werden.

Erfindungsgemäß steht die Elastomerschicht im eingebauten Zustand der Dichtung nur an den um die Randkante umlaufenden Dichtlippen mit den abzudichtenden Bauteilen in Kontakt. Dadurch kann unerwünschtes Anhaften der niedriger liegenden Bereiche der Elastomerschicht verhindert werden, was ein späteres Ersetzen der Zylinderkopfdichtung ohne das Entfernen von Elastomerresten ermöglicht.

Weitere Vorteil und Merkmale der vorliegenden Erfindung werden aus der folgenden Beschreibung von Ausführungsform der Erfindung ersichtlich, in der auf die angefügte Zeichnung Bezug genommen wird, in der
Fig. 1 eine bevorzugte erfindungsgemäße Ausführungsform einer Zylinderkopfdichtung im Querschnitt darstellt;
Fig. 2 eine andere bevorzugte Ausführungsform der vorliegenden Erfindung im Querschnitt darstellt;
Fig. 3 eine Zylinderkopfdichtung aus Fig. 1 in eingebautem Zustand im Querschnitt zeigt;
Fig. 4 eine weitere Ausführungsform der Erfindung im Querschnitt darstellt;
Fig. 5 eine nicht erfindungsgemäße vereinfachte Ausführungsform im Querschnitt darstellt; und
Fig. 6 eine weitere alternative Ausführungsform der Erfindung im Querschnitt darstellt.

In den Figuren entspricht jeweils die linke Seite der Figur der Außenseite, d.h. der von den Brennräumen abgewandten Seite der Dichtung, während die rechte Seite dem nach innen gerichteten Teil enspricht, wo sich Verbrennungsräume oder dergleichen befinden. Während die Erfindung in den hier dargestellten Beispielen im Bezug auf die äußere Randkante der Funktionslage beschrieben wird, kann natürlich ebenso eine innenliegende Randkante etwa eines Kühlmitteldurchflusses auf die beschriebene Art geschützt werden.

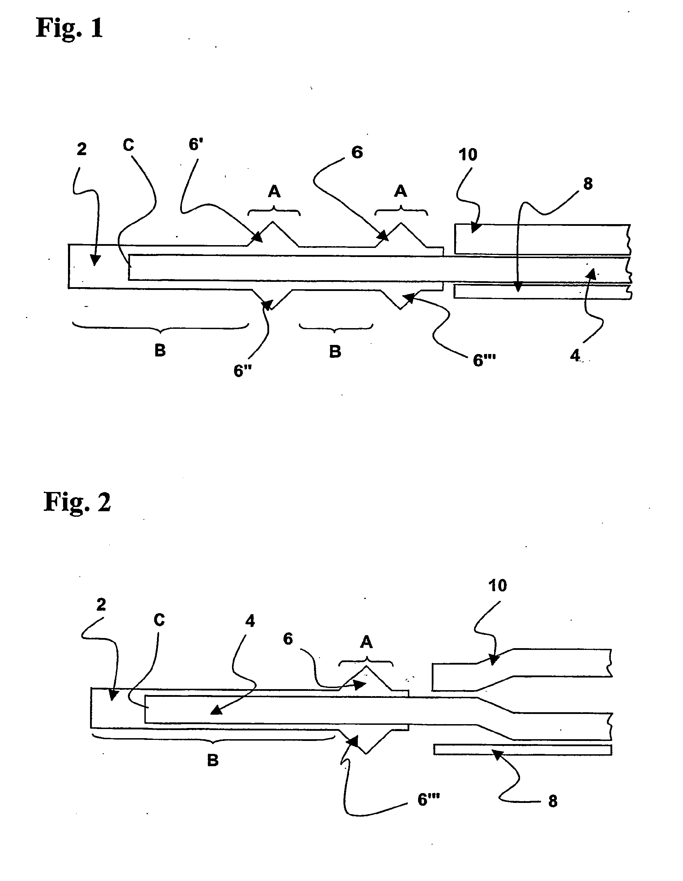

Die in Fig. 1 gezeigte erfindungsgemäße Dichtung weist eine Funktionslage 4 mit einer äußeren Randkante C auf. Weiterhin sind zwei zusätzliche Lagen 8 und 10 vorhanden, die jeweils unter- bzw. oberhalb der Funktionslage 4 angeordnet sind. Dabei steht die Funktionslage 4 am weitesten vor. Eine Elastomerschicht 2 umschließt einen Bereich der äußeren Kante C der Funktionslage 4 vollständig. Sie reicht innen bis an die zwei zusätzlichen Lagen 8 und 10 heran. Weiterhin zeigt die Figur vier Dichtlippen 6, 6', 6", 6'" in den Bereichen A, die durch um die Kante C umlaufende Sicken gebildet werden. Die Elastomerschicht 2 ist somit in Bereiche A mit Dichtlippen sowie in flachere restliche Bereiche B aufgeteilt. Die Dichtlippen 6, 6', 6", 6"' sind dabei in ihrer Höhe so gestaltet, dass sie etwas über die Höhe der zwei Lagen 8 und 10 hinausragen. Dadurch werden die hier im Wesentlichen als dreieckige Sicken geformten Dichtlippen beim Einbau der Dichtung zwischen Motorblock und Zylinderkopf komprimiert bzw. in ihrer Höhe gestaucht, so dass sie gut dichtend an den entsprechenden Oberflächen anliegen. Die im Bereich der Randkante C der Funktionslage 4 nach außen hin besonders dick ausgebildete Elastomerschicht schützt die Funktionslage an ihrer exponierten Kante gegenüber äußeren Einflüssen, insbesondere dem Einwirken von Flüssigkeiten, und isoliert sie gegenüber dem Kontakt zu anderen Metallteilen. Dadurch wird möglicher Kontaktkorrosion entgegengewirkt. Die Dichtlippen 6, 6', 6", 6"' bilden eine Sperre für Flüssigkeiten, Staub etc., die somit nicht zwischen die Schichten der Dichtung dringen können. Durch die Ausbildung erhabener Dichtlippen wird in deren Bereich eine erhöhte Pressung erreicht, wodurch eine gute Dichtwirkung erreicht wird. Ausserdem werden Schwingungen und Veränderungen im Spaltmaß, aufgrund von Motorvibrationen und unterschiedlicher Wärmeausdehnung der abzudichtenden Teile, ausgeglichen. Die Elastomerschicht und ebenso die Dichtlippen können beispielweise in Form einer Elastomerraupe auf die Funktionslage der erfindungsgemäßen Dichtung aufgebracht werden. Die erfindungsgemäße Dichtung soll vor allem das Eindringen von Flüssigkeiten verhindern, dient aber natürlich ebenso dazu, vor dem Eindringen von Schmutz, Staub und anderen Fremdkörpern zu schützen.

Fig. 2 stellt eine weitere Ausführungsform der vorliegenden Erfindung dar. Eine Elastomerschicht 2 besitzt hier lediglich zwei Dichtlippen 6, 6"'. Die Bereiche B der Elastomerschicht sind gegenüber den Bereichen der Dichtlippen niedriger bzw. weisen eine geringere Höhe auf. Als weitere Variation sind eine Funktionslage 4 und eine zusätzliche Lage 10 mit Halbsicken versehen. Dabei steht die Funktionslage 4 am weitesten vor.

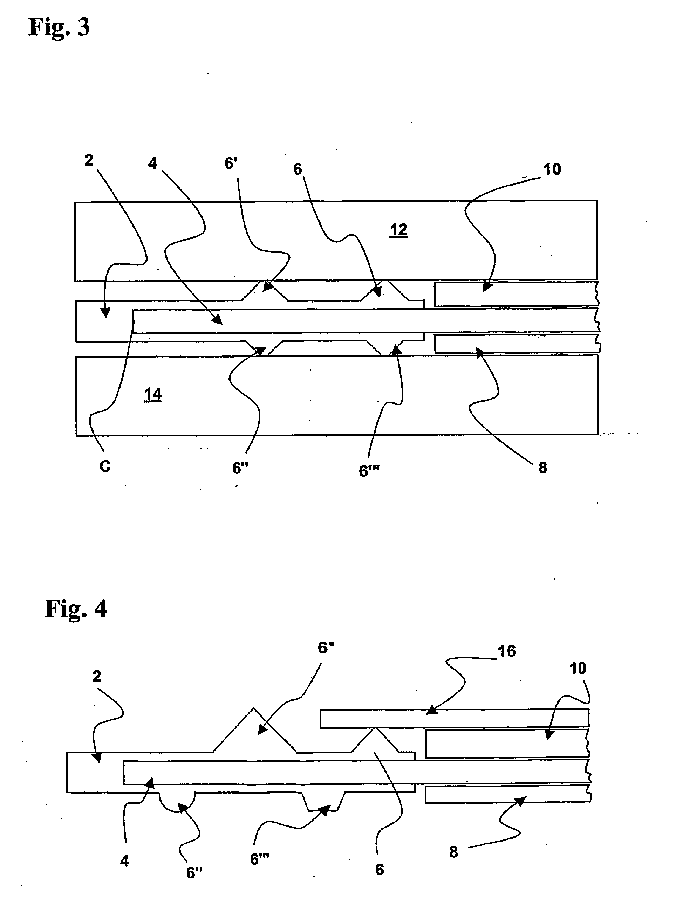

In Fig. 3 ist eine erfindungsgemäße Dichtung in ihrem eingebauten Zustand gezeigt. Zwischen einem Zylinderkopf 12 und einem Motorblock 14 befindet sich die Dichtung, die wie die Dichtung aus Fig. 1 aufgebaut ist. Wie hier zu erkennen ist, werden durch die Pressung beim Einbau die Dichtlippen 6, 6', 6", 6'" komprimiert bzw. vertikal gestaucht, so dass sie jeweils dichtend an Zylinderkopf und Motorblock anliegen. Dadurch wird das Eindringen von Flüssigkeiten und anderen Fremdkörpern zwischen die Bauteile 12 und 14 verhindert. Die Funktionslage 4 ist im Bereich der äußeren Randkante durch die Elastomerschicht 2 gegen Zylinderkopf 12 und Motorblock 14 isoliert, so dass Kontaktkorrosion aufgrund unterschiedlicher Redoxpotenziale der beteiligten Materialien verhindert wird. In einer Variation des hier gezeigten Beispiels können die Elastomerschicht 2 und/oder die Dichtlippen 6, 6', 6", 6"' bzw. deren relative Dicken so angepasst werden, dass die Dichtlippen 6, 6', 6", 6'" im eingebauten Zustand noch mehr zusammengedrückt werden, wodurch die Dichtwirkung erhöht wird. Die niedrigeren Bereiche B stehen mit Zylinderkopf und Motorblock nicht in Kontakt. Hier besteht hier aber der Vorteil, dass trotz ausreichender Abdichtung und Isolation durch die Dichtlippen 6, 6', 6", 6'" die Funktionslage 4 im Bereich der Randkante C eine gewisse Freiheit behält, zu schwingen bzw. sich zu biegen. Dadurch kann unterschiedlicher Wärmeausdehung und Vibrationen der beteiligten Bauteile begegnet werden, ohne die Elastomerschicht 2 oder Funktionslage 4 durch mechanische Verformung zu stark zu beanspruchen. Ausserdem wird ein unerwünschter dauerhafter Hafteffekt (Festbacken) der Elastomerdichtung 2 an den abzudichtenden Oberflächen minimiert, wenn nur die Dichtlippen 6, 6', 6", 6"' dichtend anliegen, wodurch ein späterer Austausch der Dichtung wesentlich erleichtert wird. Weiterhin würde eine vollflächig anliegende Elastomerschicht dazu neigen, im eingebauten Zustand nach innen oder außen zu quellen bzw. sich seitlich auszudehnen, was natürlich unerwünscht ist. Dagegen ist ein (geringfügiges) seitliches Quellen der Dichtlippen 6, 6', 6", 6'" unproblematisch oder dient sogar der Abdichtfunktion.

Fig. 4 zeigt eine alternative Ausführungsform der Dichtung gemäß der vorliegenden Erfindung. Die Dichtung setzt sich zusammen aus einer Funktionslage 4, einer Elastomerschicht 2, sowie drei zusätzlichen Lagen 8, 10 und 16. Dabei befinden sich die Lagen 8 und 10 jeweils unter- bzw. oberhalb der Funktionslage 4, und reichen gleich weit nach außen. Die Funktionslage 4 steht am weitesten vor. Die Lage 16 ist über der Lage 10 angeordnet und steht über die Lage 10 vor. Die Elastomerschicht 2 ist wie bei den vorigen Beispielen um die Randkante der Funktionslage 2 geschlossen, und reicht mit ihren inneren Enden bis an die Lagen 8 und 10. Die weiter nach außen reichende dritte Lage 16 reicht über das innere Ende der Elastomerschicht hinaus. Es sind vier Dichtlippen 6, 6', 6", 6"' ausgebildet, von denen die innere der oberen beiden dichtend von unten an der Lage 16 anliegt. Die weiter außen liegende obere Dichtlippe 6' ist in ihrer Höhe so ausgebildet, dass sie etwas über die Oberkante der Lage 16 hinausragt, um so in eingebautem Zustand dichtend an dem Zylinderkopf anzuliegen. Die Gestaltung der Höhe der Dichtlippen erlaubt eine flexible Anpassung an die Gegebenheiten auch komplizierterer Dichtungen mit mehreren unterschiedlichen Lagen. Das Eindringen von Flüssigkeiten und die Isolierung verschiedener Materialien wird dadurch wirksam sichergestellt.

Eine weitere vorteilhafte Möglichkeit der Ausgestaltung der erfindungsgemäßen Dichtung ist ebenfalls in Fig. 4 dargestellt. Die Dichtlippen können ober- und unterhalb der Funktionslage 4 jeweils versetzt angeordnet werden. Dadurch kann die Steifigkeit der Funktionslage 4 beeinflußt werden. Auch kann dadurch ein Abrollen über die Dichtlippen erleichtert werden. Beispielhaft sind hier bei den unteren Dichtlippen 6", 6'" noch zwei weitere Querschnittsformen dargestellt.

Die sickenförmigen Dichtlippen können verschiedene der hier dargestellten oder auch andere Querschnitte aufweisen. Dadurch können ihre Eigenschaften den jeweiligen Erfordernissen genau angepasst werden. So können mit dreieckformigen Sicken punktuell erhöhte Pressungen erreicht werden. Dagegen wird mit halbkugelförmigen Ausbildungen eine größere Auflagefläche erreicht, der Druck wird besser verteilt, und sie bieten andere. Abrolleigenschaften. Weitere Formen wie rechteckige, trapezförmige oder sogar wellenförmige Querschnitte sind ebenfalls denkbar.

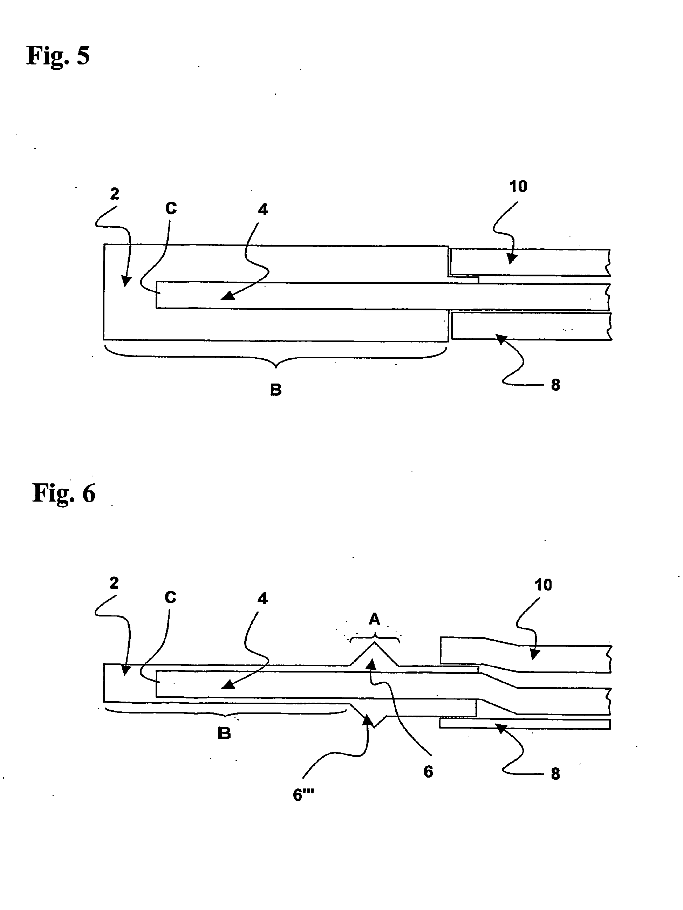

Fig. 5 zeigt eine einfache Ausführungsform, die nicht Teil der Erfindung ist. Die Dichtung besteht hier aus einer Funktionslage 4, einer Elastomerschicht 2, sowie zwei Lagen 8 und 10. Die Funktionslage 4 steht dabei am weitesten vor. Der Bereich B der Elastomerschicht 2 erstreckt sich hier auf der unteren Seite über die gesamte Breite, und die Elastomerschicht 2 liegt aufgrund der Höhe im eingebauten Zustand vollflächig an der abzudichtenden Oberfläche an. Die Elastomerschicht 2 umschließt die äußere Randkante C der Funktionslage 4, und reicht bis unterhalb der Lagen 8 und 10. Das heisst, das obere innere Ende der Elastomerschicht 2 reicht bis zwischen Funktionslage 4 und die zusätzliche Lage 10. Dadurch wird erreicht, dass im eingebauten Zustand eine Abdichtwirkung erzeugt wird, da das Ende der Elastomerschicht 2 zwischen den Lagen festgeklemmt wird. Eine solche vereinfachte Dichtung ohne die vorstehend beschriebenen Dichtlippen bietet sich vor allem in Situationen an, in denen für die Dichtlippen nicht genügend Breite vorhanden ist, oder in Fällen mit sehr dünnen Zusatzlagen. Auf der unteren Seite ist hier eine weitere Ausgestaltung dargestellt. Die Elastomerschicht 2 muss mindestens die gleiche oder eine etwas größere Höhe als die Zusatzlage 8 bzw. 10 aufweisen, um somit im eingebauten Zustand dichtend an Zylinderkopf bzw. Motorblock anzuliegen. Die hier gezeigte Situation ohne Dichtlippen bietet sich ebenso für Durchtrittsöffnungen beispielsweise für Kühlwasser an, bei denen die abzudichtenden Öffnungen relativ klein sind und eng neben anderen Öffnungen liegen, so dass Dichtlippen aufgrund der beengten Verhältnisse nicht eingesetzt werden können.

In Fig. 6 ist eine Dichtung gemäß der vorliegenden Erfindung gezeigt, die verschiedene Merkmale der Dichtungen aus den vorherigen Figuren kombiniert. Eine Funktionslage 4 ist an ihrem nach innen weisenden Teil mit einer Halbsicke versehen. Eine Elastomerschicht 2 umgibt die äußere Randkante C der Funktionslage 4, und reicht bis zwischen die Funktionslage 4 und jeweils eine obere Lage 10 und eine untere Lage 8. Im eingebauten Zustand wird daher die Elastomerschicht 2 zwischen jeweils oberer und unterer Lage 10 und 8 sowie der Funktionslage 4 eingeklemmt, zu besseren Abdichtung. Zusätzlich sind Dichtlippen 6, 6"' zwischen Randkante C und den nach außen weisenden Kanten der Lagen 8 und 10 vorgesehen, zur Verbesserung der Abdichtung.

## Patentansprüche

1. Zylinderkopfdichtung zur Abdichtung von Bauteilen (12, 14) einer Verbrennungskraftmaschine, umfassend eine metallische Funktionslage (4) mit mindestens einer einen Brennraum umgebenden Öffnung und einer von der Öffnung abgewandten nach außen weisenden Randkante (C), und eine elektrisch isolierende und fluiddichte Elastomerschicht (2),
wobei die Elastomerschicht (2) die Randkante (C) der Funktionslage (4) umschließt, und mindestens eine weitere Lage (8, 10, 16), wobei die Funktionslage (4) in einer vom Brennraum abgewandten Richtung über die mindestens eine weitere Lage (8, 10, 16) vorsteht, **dadurch gekennzeichnet, dass** die Elastomerschicht (2) jeweils mindestens eine um eine Randkante (C) umlaufende Dichtlippe (6, 6', 6", 6"') auf ihrer Ober- und Unterseite aufweist, wobei die Elastomerschicht (2) im eingebauten Zustand der Zylinderkopfdichtung nur an den Dichtlippen (6, 6', 6", 6"') mit den abzudichtenden Bauteilen (12, 14) in Kontakt steht.

2. Zylinderkopfdichtung gemäß Anspruch 1, wobei die Elastomerschicht (2) an eine Randkante der mindestens einen weiteren Lage (8, 10, 16) angrenzt.

3. Zylinderkopfdichtung gemäß einem der vorhergehenden Ansprüche, wobei eine Elastomerschicht (2) die Randkante der mindestens einen Öffnung umschließt.

4. Zylinderkopfdichtung gemäß einem der vorhergehenden Ansprüche, wobei die Dichtlippen (6, 6', 6", 6"') auf der Ober- und Unterseite gegeneinander versetzt angeordnet sind.

5. Zylinderkopfdichtung gemäß einem der vorhergehenden Ansprüche, wobei die Dichtung mindestens zwei weitere Lagen (10, 16) ober- oder unterhalb der Funktionslage (4) aufweist, und die Elastomerschicht (2) auf der Seite der mindestens zwei weiteren Lagen (10, 16) mindestens zwei Dichtlippen (6, 6', 6", 6"') aufweist, und wobei mindestens eine Dichtlippe (6) zwischen den Randkanten der ersten Lage (10) und der zweiten Lage (16) angeordnet ist.

6. Zylinderkopfdichtung gemäß einem der vorhergehenden Ansprüche, wobei die Dichtung mindestens eine Lage (10, 8) ober- oder unterhalb der Funktionslage (4) aufweist, und die Elastomerschicht (2) teilweise zwischen der Funktionslage (4) und der mindestens einen Lage (8, 10) angeordnet ist.

## Claims

1. Cylinder-head gasket for sealing off components (12, 14) of an internal combustion engine, comprising a metallic functional position (4) with at least one opening surrounding a combustion chamber and a border edge (C) pointing outwards away from the opening, and an electrically isolating and fluid-impervious elastomer layer (2),
whereby the elastomer layer (2) encloses the border edge (C) of the functional position (4), and at least one further position (8, 10, 16), whereby the functional position (4) projects in a direction away from the combustion chamber beyond the at least one further position (8, 10, 16), **characterised in that** the elastomer layer (2) respectively has at least one sealing lip (6, 6', 6" , 6"') surrounding a border edge (C) on its upper and lower side, whereby the elastomer layer (2), in the installed state of the cylinder-head gasket, is in contact with the components (12, 14) to be sealed off only at the sealing lips (6, 6', 6'', 6''').

2. Cylinder-head gasket according to claim 1, whereby the elastomer layer (2) adjoins a border edge of the at least one further position (8, 10, 16).

3. Cylinder-head gasket according to one of the preceding claims, whereby an elastomer layer (2) encloses the border edge of the at least one opening.

4. Cylinder-head gasket according to one of the preceding claims, whereby the sealing lips (6, 6', 6", 6"') are arranged offset to one another on the upper and lower side.

5. Cylinder-head gasket according to one of the preceding claims, whereby the gasket has at least two further positions (10, 16) above or below the functional position (4), and the elastomer layer (2) has at least two sealing lips (6, 6', 6", 6"') on the side of the at least two further positions (10, 16), and whereby at least one sealing lip (6) is arranged between the border edges of the first position (10) and the second position (16).

6. Cylinder-head gasket according to one of the preceding claims, whereby the gasket has at least one position (10, 8) above or below the functional position (4), and the elastomer layer (2) is arranged partially between the functional position (4) and the at least one position (8, 10).

## Revendications

1. Joint de culasse destiné à étanchéifier des pièces (12, 14) d'une machine à combustion interne, comprenant une couche de fonction métallique (4) avec au moins une ouverture entourant une chambre d'explosion et une arête de bord (C) orientée vers l'extérieur et opposée à l'ouverture, et une couche élastomère étanche aux fluides et d'isolation électrique (2), la couche élastomère (2) entourant l'arête de bord (C) de la couche de fonction (4) et au moins une autre couche (8, 10, 16), la couche de fonction (4) faisant saillie dans une direction opposée par rapport à la chambre d'explosion de l'autre couche (8, 10, 16) au moins au nombre de une, **caractérisé en ce que** la couche élastomère (2) présente respectivement au moins une lèvre d'étanchéité (6, 6', 6", 6"') circulaire autour d'une arête de bord (C) sur sa face supérieure et inférieure, la couche élastomère (2), à l'état intégré du joint de culasse, étant en contact avec les pièces (12, 14) à étanchéifier uniquement au niveau des lèvres d'étanchéité (6, 6', 6", 6''').

2. Joint de culasse selon la revendication 1, la couche élastomère (2) étant adjacente à une arête de bord de l'autre couche (8, .10, 16) au moins au nombre de une.

3. Joint de culasse selon l'une quelconque des revendications précédentes, une couche élastomère (2) entourant l'arête de bord de l'ouverture au moins au nombre de une.

4. Joint de culasse selon l'une quelconque des revendications précédentes, les lévres d'étanchéité (6, 6', 6", 6"') étant disposées sur la face supérieure et inférieure de manière décalée l'une par rapport à l'autre.

5. Joint de culasse selon l'une quelconque des revendications précédentes, le joint présentant au moins deux autres couches (10, 16) au-dessus ou en-dessous de la couche de fonction (4), et la couche élastomère (2) présentant, sur le côté d'autres couches (10, 16) au moins au nombre de deux, au moins deux lèvresd'étanchéité (6, 6', 6", 6"'), et au moins une lèvre d'étanchéité (6) étant disposée entre les arêtes de bord de la première couche (10) et de la deuxième couche (16).

6. Joint de culasse selon l'une quelconque des revendications précédentes, le joint présentant au moins une couche (10, 8) au-dessus ou en-dessous de la couche de fonction (4), et la couche élastomère (2) étant disposée partiellement entre la couche de fonction (4) et la couche (8, 10) au moins au nombre de une.
